# EUROPEAN PATENT APPLICATION

(11) **EP 4 195 142 A1**
(43) Date of publication of application: **14.06.2023**
(21) Application number: 22211306.0
(22) Date of filing: 05.12.2022
(51) Int. Cl.: G06T 3/40, G06T 7/00

(54) **SYSTEM FOR DETECTING THE DEFECTS OF THE WOODEN BOARDS AND THEIR CLASSIFICATION INTO QUALITY CLASSES**

(30) Priority: 08.12.2021 RO 202100757
(71) Applicant: Fordaq International S.r.l., 010992 Bucuresti (RO)
(72) Inventor: LEORDEANU, Marius, 010626 Bucuresti (RO); MUNTIANU, Iulia-Adriana, 040584 Bucuresti (RO); MARCU, Alina-Elena, 030703 Bucuresti (RO); ONEATA, Dan Teodor, 051705 Bucuresti (RO); DEMIAN, Andrei Laurentiu, 041241 Bucuresti (RO); MUTU, Catalin, 220106 Drobeta Turnu Severin (RO); BUSCA, Nicolas Guillermo, 062102 Bucuresti (RO); ION, Bogdan-Ionut, 117685 Sat Stolnici, Comuna Stolnici (RO)
(74) Representative: Tuluca, F. Doina

(57) **Abstract**

This invention pertains to a system for detecting defects in wooden boards and classifying them into quality classes, which uses advanced algorithms of artificial intelligence and computational vision used for grading/classifying wooden boards. The system according to the invention proposes a solution for the automated grading of wooden boards, particularly lumber, using last generation industrial cameras in order to acquire color images (RGB) of the faces of the boards, images which, further, are processed and analyzed by advanced algorithms of artificial intelligence and computational vision. The system enables the detection of various types of wood defects with high precision, calculates in real time the optimal cuts and the quality class to which the board belongs, on the production line, being a solution adequate also for small and medium-sized companies, thanks to the low cost of implementation and operation.

## Description

This invention refers to a system for detecting defects in wooden boards and classifying them into quality classes, which uses advanced algorithms of artificial intelligence and computational vision (hereinafter referred to briefly as neural system) used for grading/classifying wooden boards.

Over time, manual labor has proven to be one of the largest problems of the wood industry. From the first modification until getting finished products, wood goes through various processing stages which involve the physical and decision-making effort of one or more human operators, who are not able to provide a high enough degree of precision so as to lower the losses of raw material.

In the procedure of cutting lumber boards in order to get boards of a desired quality, the losses can reach up to 40%. Such errors can be drastically curtailed through a digitalization of processes, digitalization which is now being at a low level in this industry, being accessible in terms of price and technology only to large companies. There is an urgent need for an automated solution of wood processing for small and medium-sized companies that depend on human operators and have major raw material losses, with critical consequences for productivity and the environment.

Over the last years, there have been developed a number of technologies for the automation of the works for grading/classifying wooden boards using the surveillance systems placed with cameras seated on the board conveyors. Nevertheless, few have been able to bring up the classification rate and enable the lessening of human intervention, while maintaining the desired quality. Genuinely, there have been made a number of attempts for simplifying and quickening the wood classification. Because the evaluation of an object requires the evaluation of its peripheral surface, it has been regarded the positioning of the cameras above and below a conveyor which transfer the pieces of wood, for example, but a recurring problem is the building-up of debris on the cameras below.

In the U.S.A. Patent No. 5.412.220 issued to Moore in 1995, the problem of debris build-up on the lower/bottom chambers is approached by adding to the conveyor a mechanism to rotate each piece of wood so that all four longitudinal faces of it can be exposed to a chamber.

Despite such evolutions, it required a system and method for evaluating and classifying objects such as wooden boards or lumber and pieces of wood, for example, for further treatment, which would allow quality and speed at a reasonable price and with enhanced performance.

US Invention No. 7227165, published on 05.06.2007, Hubert et al., reveals a system and method for classifying a piece of wood, especially a board, and simultaneously classifying it, enabling the observation of four longitudinal faces thereof, so as to be determined the optimum specifications for its further use, such as finishing, end cutting and other applications. The system integrates a structure (frame) mounted on/attached to a cross conveyor, a viewing unit and a processing unit. The viewing unit of the camera is located partly above the conveyor in a plane inclined towards the horizontal, collecting data on a side longitudinal face which is superior to an object as the object moves on the conveyor and partly located below the conveyor, at an angle to it, collecting data from a side longitudinal face complementary to the object, as well as from a lower longitudinal face of it, as the object moves on the conveyor. The processing unit includes a main/master component for the control and monitoring of the operation parameters, having at least one of the components connected directly to the viewing subsystem and being dedicated to the acquisition of the preliminary treatment of the object images; an integration component of all data regarding the object, including defects and their positioning; a computational component for an optimal solution for the object. The structure has articulated arms which can be extended and adjusted to various angles in order to support the lights of the viewing unit. The system enables the classification of wooden parts according to predetermined standards, at a rate of 200 pieces per minute, with a margin of error of less than or equal to 2%.

The system described in Patent No. 7227165 has in its composition a belt conveyor and cameras placed above and below it, at a precise angle, with a very small (15 degrees) tolerance, not being customizable depending on the manufacturing line on which it is installed. The system is dependent on the measurements from sensors seated on the production line.

The technical problem that the invention solves is the achievement of an installation for the grading/classification of wooden boards, which can be effortlessly installed on any production line.

The system for detecting the defects of the wooden boards and for their classification into quality classes according to the invention is defined through the specific characteristics highlighted in Claims 1-15.

By applying the invention, the following benefits will be acquired:
- detects with high precision, in real time, the various types of wood defects, calculates the optimal cuts and the quality class to which the board belongs;
- provides a complex procedure of image reconstruction, being able to identify the board of interest in an image;
- variable number of sensors placed on the production line for measurements, depending on the production line and its specifications, defined by the customer.
- the system according to the invention, can be easily installed on any production line with low costs, thus being a solution adequate also for small and medium-sized companies.

The system for detecting the defects of the wooden boards and for their classification into quality classes, according to the invention, comes as a solution for the automated grading of wooden boards, especially lumber, using cutting-edge industrial cameras in order to acquire color images (RGB) of the board faces, images that are further processed and analyzed through advanced algorithms of artificial intelligence and computational vision. The neural system detects with high precision the various types of wood defects, calculates in real time the optimal cuts and the quality class to which the board belongs, on the production line, being a solution adequate for both small and medium-sized companies and for large companies, due to the low cost and facile manner of installation on any production line.

We present some qualitative examples that include our proposal for the accomplishment of the invention, together with a description of the meaning of each figure in part:
- Figure 1, structural block diagram of a system for detecting defects in wooden boards and their classifying into quality classes, according to the invention;
- Figure 2, image illustrating the placing of cameras of the data acquisition sub-system, on a conveyor of a production line;
- Figure 3, diagram of the components of the sub-system in Figure 2;
- Figure 4, software structure of a mini PC from the production line;
- Figure 5, industrial monitor from the technical room;
- Figure 6, processing unit;
- Figure 7, inventory unit;
- Figure 8, internal network for data transfer acquired in production; and
- Figure 9, data processing flowchart.

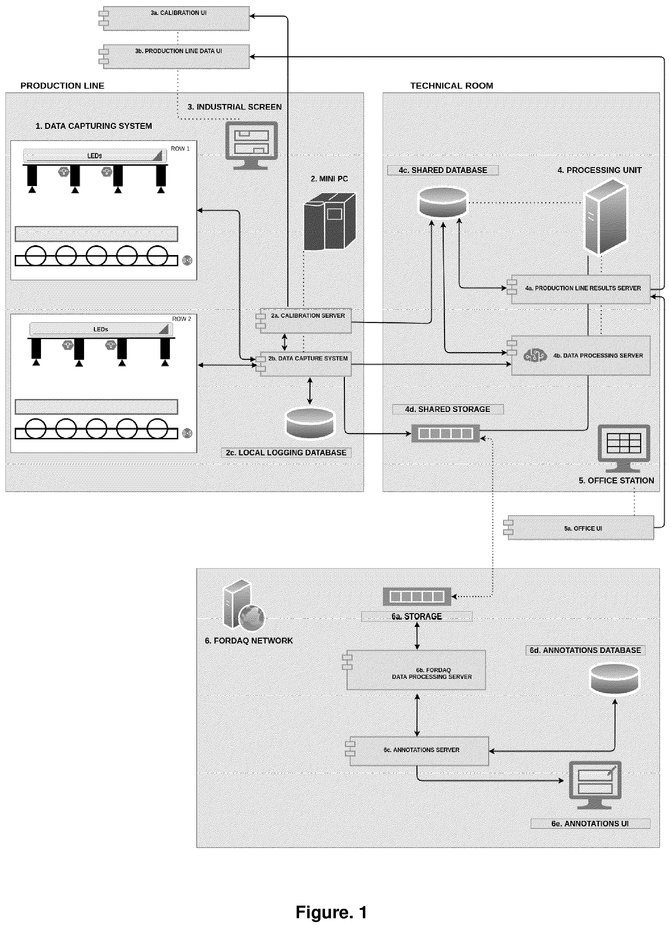

Referring to Figure 1, a system for detecting the defects of wooden boards and their classifying into quality classes incorporates a structure attached to a transverse conveyor of boards in a production line, which has a system for turning them while moving along the line, a viewing unit mounted and image processing unit with neural system. The neural system, according to the invention, comes as a solution for the automated grading of lumber, using up-to-date RGB industrial cameras with a resolution of at least 16 megapixels, with the GigE interface and with a sensor size of at least 1 inch so as to acquire images of the board faces, images which, further, are processed and analyzed by means of advanced algorithms of artificial intelligence and computational vision. The neural system detects with high precision the various types of wood defects, calculates in real time the optimal cuts and the quality class to which the board belongs, on the production line, being a solution adequate for both small and medium-sized companies and large companies, due to the low cost and easy way of installation on any production line. This installation implies placing, on two beams located perpendicularly to the direction of movement of the wooden boards on the conveyor/production line, above the production line, one before and the other after the board turning mechanism, a row of industrial cameras, in the embodiment with four cameras, LED lights, laser and position sensors. Each row is in charge of acquiring images for one face of the lumber board, both of which being connected to a processing unit 4 that will analyze these images and generate the related results.

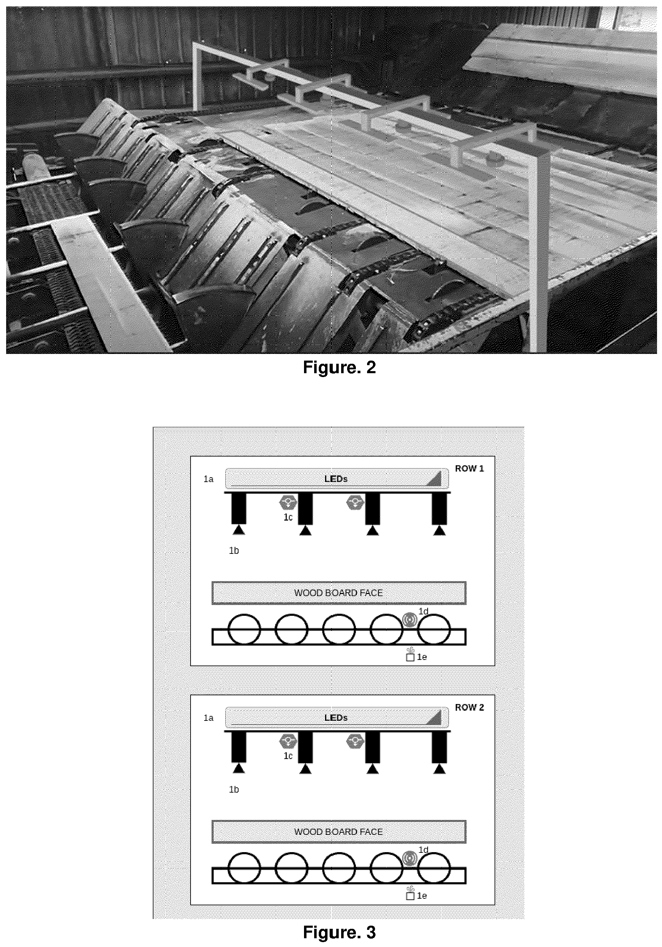

With regard to Figure 2 and Figure 3, the data acquisition sub-system is made up of an assembly of industrial cameras 1b (hereinafter referred to as cameras), LED lights 1a and some sensors 1c. The latter are used in order to determine the time when a board passes the production line and acquires high-resolution images that will further be used for classifying the board into a quality class.

Industrial LED lights 1a are used for the purpose of illuminating the production line and minimizing the sensitivity of the system to ambient lighting.

The industrial cameras 1b are arranged in two rows, one row for each side of the plate, each row being composed of a number of industrial cameras, in the concrete example of realization - four cameras, which are triggered simultaneously, when a board passes through the production line. Each camera is individually calibrated by the calibration system. The two rows of cameras are each attached to a shock- and vibration-resistant metal beam by a clamping system with customized design. Each clamping system supports a camera and a sensor, described in point 1c. The camera lens is covered by a transparent filter in order to protect it from dust and sawdust. The data acquisition sub-system consists of two camera assemblies placed above the conveyor belt, one assembly before and the other after the plate turning mechanism, each of which capturing one face of the wooden object/ plate, so that there are not required any changes to the line of production.

Each camera can have a laser sensor 1c attached, used so as to determine the plate thickness. For the purpose of having redundancy - in cases where a board would have a hole or the sensor would read an incorrect value - each row of cameras will dispose of at least two sensors.

At the level of the production line, vertically to the cameras, there are a series of position sensors 1d used for triggering the cameras 1b. When a board passes over a 1d sensor, the sensor changes its value and sends a signal to the cameras in the row corresponding to it so as to acquire images. The system can accommodate maximum 3 sensors per row.

A 1e subsystem for dust and sawdust removal encompasses a compressed air installation that is programmed to blow at regular/preset time intervals any dust or impurity that may accumulate over the position sensors. This ensures that the sensors can read all passes of the boards over the production line.

The acquisition subsystem can have a variable number of cameras and their auxiliary elements, depending on the distance to the production line, being able to compose in a single panoramic image the initial object through a post-processing procedure applying complex algorithms of computational vision and artificial intelligence in order to build an accurate image of the object and further determine based on it the optimal defects and cuts, as will be further shown.

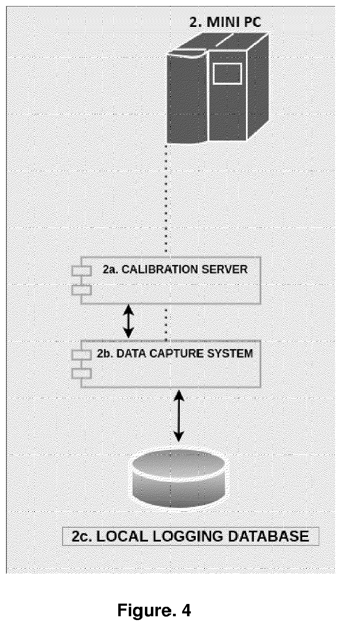

In respect of Figure 4, where a MINI PC 2 is illustrated which is placed in the vicinity of the production line, in a box certified for industrial use, together with all the wiring termination components required for connecting the cameras and sensors, as well as for transmitting the data to the processing unit 4.

On it is implemented an initial calibration server 2a and a data capture subsystem 2b, this having the following software components:
- The initial calibration subsystem, implemented on a calibration server
- Maintenance system
- Data acquisition system
- Local logging system for camera parameters and acquisition system

On the initial calibration server 2a it is implemented a control subsystem for data acquisition. Therefore, it is used for initial system setup, as well as for maintenance. Calibration involves the initial setting of the lens focus, data generation for color correction and removal of the effect of vignetting (dimming the brightness or saturation of an image at the periphery from its center), generating the basic transformation matrices that will be used so as to compose the four images in a single panoramic image, determining the distance between distance sensors and the production line. The calibration is performed in steps, the user being guided in this process through an intuitive interface, shown on the industrial monitor. The calibration procedure is unique to the acquisition system, using auxiliary materials such as chessboards and the white board to balance the colors, as indicated next.

Based on the data generated from the interface, the calibration server executes the following actions:
- Stores the white board images that will be used for correcting the vignetting;
- Determines if the whiteboard is optimally illuminated. This decision is made by calculating the percentage of fully saturated pixels in the entire image. If this process is within an accepted range, it saves the images and stops data acquisition with other values of the exposure time from the data acquisition system.
   Otherwise, sends a request to bring up/decrease the exposure time value and tests the new resulting image until the saturated pixel percentages are within an accepted range. The optimal images will be saved to a location in the common storage unit and further used by the processing unit 4.
- Calculates the basic transformations used to execute panoramic images with lumber boards. For this, it acquires from the production line four images that have a chessboard of known dimensions in the areas of intersection between the adjacent images. The person specialized in the field knows to that chessboards appear frequently in the theory and practice of computer vision since their geometry is suitable for algorithmic processing. The appearance of chessboards in computational computer vision techniques can be divided into two main areas: camera calibration and feature extraction - points of interest of the image. Among these, corners are a natural/canonical feature of the local image exploited in many computational vision systems. Commonly, a *corner* can be defined as the intersection of two edges. Corners are a useful characteristic of the image as they are necessarily different from their neighboring pixels. The initial calibration server 2a determines the chessboard corner positions in all images and calculates a transformed between the chessboard corners in two consecutive images. In case it fails to identify all corners in an image, it generates an error message that will guide the user to reposition the chessboard that could not be identified. The basic homographic transformed will be saved in the common database and used further by the processing unit 4.
- Calculates the homographic straightening transformed between the plane of the previously composed panoramic image and the orthogonal plane. Given that the 3 chessboards positioned in the areas of intersection among the images are placed in the same plane, calculates the transformed that translates the corners detected in the image to their corresponding positions in a virtual orthogonal plane. After the first procedure of straightening that takes into account all the corners of the 3 chessboards, the procedure is re-applied using only the corners of the central chessboard. The final transformation will be a composition of the two intermediate transformed and will be saved in the common database and then used by processing unit 4.
- Computes the base mapping for the correspondence between pixels and real-world sizes. On the final image, transformed in the previous step with the homographic straightening matrix, there are detected the chessboard corners. The size of a square on the chessboard is known - 2 cm width. There are calculated all distances between two consecutive corners, and based on the median size in pixels, we determine the base px/cm mapping. This will be saved for each row of cameras in the common database and used further by the processing unit 4.

Referring to Figure 4, data capture subsystem 2b it is implemented in Node RED, **Node-RED** is a development tool based on flow for visual programming, originally developed by IBM in order to connect hardware devices, APIs and online services as part of the Internet things. Node-RED provides a stream editor based on the web browser that can be used to create JavaScript functions

The data acquisition subsystem controls all components on the production line and writes the images with board sections in raw format to the common storage unit. Likewise, it triggers the data processing system by calling an *endpoint* (a remote IT device that communicates bidirectionally with a network to which it is connected) from the processing server.

The flow is defined as follows:
- As soon as a board passes over a position sensor, the data capture subsystem receives the information from the sensor and sends a trigger command to the cameras.
- The four cameras are triggered at the same time and the raw (unprocessed) data is returned to the data capture subsystem.
- The data capture subsystem reads data on the laser distance sensors related to each camera (where available).
- As soon as the images are written to the common storage unit 2c, it is sent a processing request to the processing unit 4b, with all the information captured from the production line: the location where the images were written, the distance to the production line, the number of the row from which the data is sent, the reference number of the images.

A 2c local logging database, possesses all information related to sensors, camera triggering, camera errors, trigger duration and data generation are stored in a local database serving for the debugging any inconsistencies that could appear.

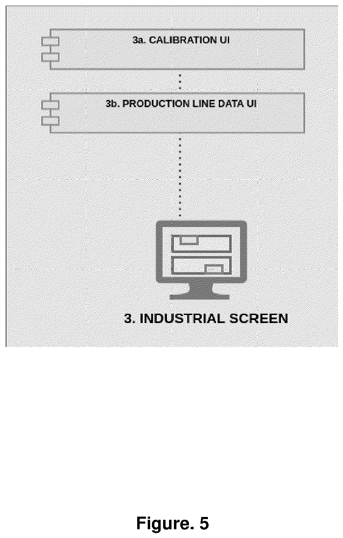

With respect to Figure 5, where it is presented the industrial monitor 3, which is placed near the production line. This is used for displaying the initial calibration interface, as well as for showing the lumber boards that pass through the production line, together with the results generated by the processing server for them: quality class, optimal cuts, detected defects.

Calibration interface 3a is served from the *back-end* by calibration server 2a. The calibration procedure will take place upon the initial installation of the neural system and requires that the user passes through several steps that will ensure that the neural system according to the invention is operating accordingly. The same procedure will have to be resumed if an industrial camera or an LED needs to be replaced. Calibration will be carried out in successive steps as shown below.

The first step is calibration of the focusing, during which every row of cameras will be calibrated individually. In the first step, the user will see a notification letting him/her know that it is necessary to calibrate the focusing of the lens until the objects in the image are sufficiently clear. This will be achieved by turning the top ring on the lens. The user is guided to place the white board below the camera, and above it, the chessboard. The camera aperture has to be set to maximum through turning clockwise the center ring. Each camera will be calibrated independently, and the user will have to press "Next" after calibrating each one.

The second step is to calibrate the exposure time and to determine the distances to the production line. The user is guided so as to remove the chessboard from the field of view of the camera and maintain only the white board, covering as much of the observable plane as possible with it. As soon as it confirms the chessboard elimination, the system will start automatically the exposure time calibration by varying the values until it reaches the optimal value. At the same time, it will collect information from laser distance sensors and calculate the distance to the production line. All collected information will be stored in the common database and on the common storage unit, being further used for running the system in the production according to the invention.

As soon as the calibration of a camera is ended, the exposure time related to it will be stored in its configuration file in the system for data acquisition and guide the user in order to move to the next camera, until all four cameras are calibrated.

The third step is the generation of basic homographic transformed for the reconstruction of panoramic images.

The user is asked to place the 3 chessboards in the intersection areas between the cameras. The interface will mark the areas that should include the chessboards. As soon as the user confirms the positioning of the chessboards, the system will capture images from all four cameras and will attempt to determine the transformed. If the chessboards are not placed appropriately, the user will be informed through a message in the interface. If their determination was accomplished successfully, the user will see displayed a panoramic image made up of the four individual images captured previously.

The same steps will be repeated for the second row of cameras. At any point in time during the calibration process, the user can navigate among the steps and redo them if needed. At each start of the calibration, he can decide if it will be started from the last calibration or if it is intended to do a head-to-tail calibration.

The Industrial Monitor 3 also displays the Production Line Interface 3b. As long as the neural system according to the invention is in running mode, the industrial monitor will display images processed with the lumber boards, at the pace of the production line. As soon as a board passes through the production line and reaches the employee located at the end of the production line, it will display the board with detected defects, optimal cuts, its dimensions and quality class. The employee can change the quality class by means of a simple push of a button, associated with the desired quality degree. The interface will also include a statistics section that displays various data on the production line: number of boards processed, boards grouped by quality class, total volume grouped by grade, etc. The interface is served by the production server, installed on the processing unit.

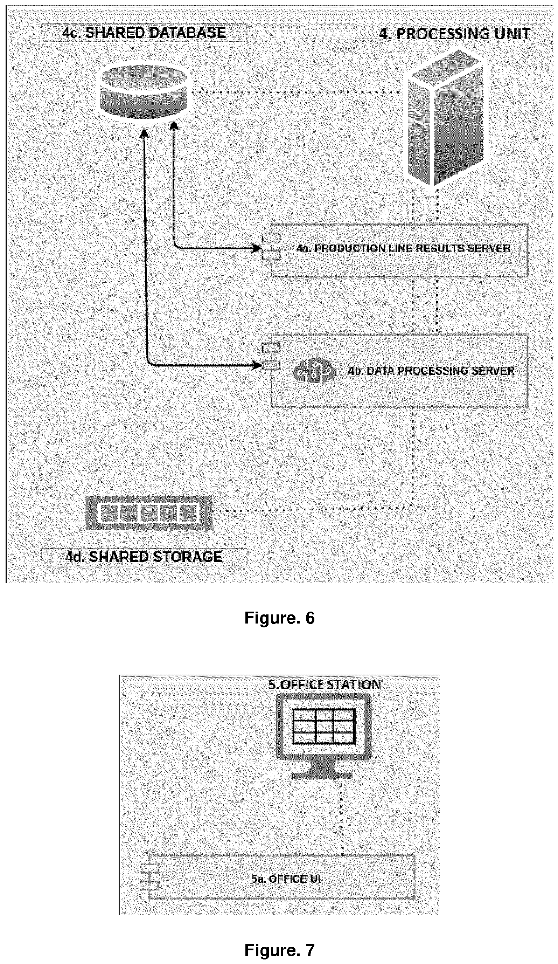

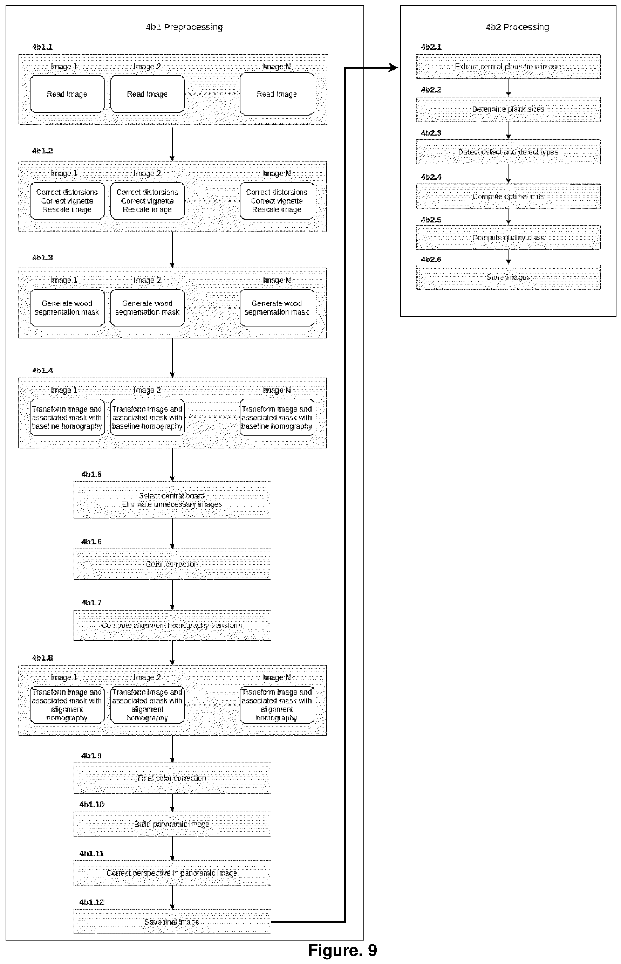

In relation to Figure 6 and Figure 9 where it is shown the structural diagram and software flowchart of the processing unit 4 which is placed in a technical room of a factory of wood products and is connected to the Mini PC 2 by optical fiber. This unit incorporates/on this unit there are configured a server for generating results 4a, a data processing server 4b, a processing unit database 4c and a common storage unit 4d. The processing unit 4 is responsible for processing the images captured from the production line and generating the final results related to an analyzed board. The results are stored in the common database and further shown in the interface of the production line and the stocktaking interface.

The server for the production line 4a is the component of the processing unit 4 that serves as the *back-end* for the interface on the production line, described in section 3b. The final results are read from the common database and common storage drive and organized into a specific format which is easy to understand for the end user. The server for generating results 4a implements/supports a result generation system.

The data processing server 4b represents a significant specific feature of the neural system according to the invention, being responsible for interpreting the information received from the acquisition subsystem and generating the final results presented to the user.

The data processing server is called from the production line through an *endpoint* with the following parameters:
- The reference number of the board. As these boards pass sequentially through the production line, the reference number for a board photographed on the first row of the system will correspond to the same board on the second row, thus correlating the two faces of the same lumber board.
- The distances of the laser sensor. This parameter is a list of values acquired from the laser sensor, based on which the plate thickness is calculated. Knowing the value collected in the calibration step - distance to the production line, the thickness value will be the difference between the distance to the production line and the value acquired in this step.
- The id of the row from which the images were acquired.
- The path on the common storage unit where the images were saved.

### Step 1: Pre-processing of the images 4b1

When a new processing request reaches the server, the following procedure is initiated:
- Reading of the 4b1.1 images that need to be processed.
- The distortion correction 4b1.2 using distortion coefficients and intrinsic matrix of the camera - pre-calculated in the lab, identical for all 8 cameras and lenses.
- Correction of the vignette for each captured image.
- Segmentation of the 4b1.3 boards visible in each image by passing the images through a neural network for wood area detection. The resulting segmentation mask is processed by advanced algorithms of computer vision for high-precision separation of the boards.
- Transforming the images and wood masks corresponding to 4b1.4 with the basic homographies determined in the calibration process. These will be used as a starting point for building a refined panoramic image.
- Determination of the central board visible in the images. It is considered a reference image the image acquired from the camera aligned with the triggered position sensor. A precise positioning of the sensor in the hardware structure ensures the viewing of the board of interest in the center of the reference image.
- Determining the contour of the central board in the images adjacent to the selected reference image.
- Elimination of redundant images 4b1.5 from the process for the optimization of the processing times.
- Correction and balancing of the 4b1.6 colors in the four images. The procedure calculates the corresponding pixels in the regions of intersection among the four images and determines the transformed that balances their values, starting from the reference image.
- On the corrected images, it is applied a different procedure for optical flow estimation. This method selects a large number of uniformly distributed pixels from the area of overlapping between the transformed images, chosen within the center board, in order to ensure the reconstruction of the final image with a very high accuracy.
- Using a pyramidal implementation of the Lucas-Kanade algorithm for determining the correspondences of previously chosen points in the area of overlapping from consecutive images. We calculate the affine transformed that transposes the points in one image to the adjacent image.
- The application of a procedure of ensuring the accuracy of the Lucas-Kanade algorithm as follows: if the number of rightly transformed points is not large enough in relation to the total number of initially selected points, the procedure will be put out and the basic homographies will be used.
- Starting from the assumption that the previous step was a success, it is reapplied a procedure for correction and final color balance 4b1.9 to the images transformed in the previous step. Thus, it is ensured that the final images will be uniformly balanced in the RGB spectrum, the transitions in the areas of overlapping between two consecutive images not being visible.
- The central lumber board, as well as its corresponding wood mask, are built from the four transformed images, using as pivot the reference image. Therefore, all images will be translated to the plane of the reference image.
- The next step 4b1.11 is the application of straightening the perspective of the panoramic image 4b1.10 in order to bring it into the orthogonal plane. Given that the camera angle relative to the production line plane has a tolerance around the angle of 90 degrees, it must be compensated for the difference in perspective. In the calibration procedure, it is calculated the transformed that converts the chessboards into rectangles of the same size and shape. Knowing the positions of the chessboard corners in an image captured with a 90-degree camera, we determine the homography that transforms the detected corners to the pre-computed positions. This is the step that generates the final result of the pre-processing 4b1.12.

The pre-processing procedure was implemented in a multithreaded, highspeed environment in order to ensure that fulfillment of the time constraints on the production line. Each step is logged and can be checked in case of any system malfunction. In this manner, the system according to the invention disposes of a complex procedure of image reconstruction and can identify the board of interest in an image.

### Step 2: Result generation/processing:

The second step is the generation of the results that will be shown to the user and includes:
- extraction from the previously generated panoramic image, central board 4b2.1. It is calculated the turned rectangle of minimum size incorporating the wooden area related to the central board and it is extracted the RGB area corresponding to this rectangle from the panoramic image;
- determining the sizes of the 4b2.2 board in the following manner: in the initial step of the calibration, given the fact that it is known the size of the chessboards, we can calculate a pixel/cm base mapping. This mapping varies linearly depending on the board thickness. Knowing the thickness of the board and the mapping at 0 thickness, we can calculate the mapping for the current board, and based on that, the width and length of the board.
- Detecting the defects 4b2.3 as follows: distinct regions are extracted from the central board image and passed through a neural network of defect segmentation. The resulting segmentation mask is binarized and post-processed in order to determine the precise contour of the defects.
- optimization of the cuts 4b2.4 and grading of each face of the wooden board: this stage implies the generation of rectangular areas of clean wood, for minimizing the losses;
- the determination of the quality class 4b2.5 is directly impacted by the area of clean wood - the percentage of the surface of rectangular areas of clean wood from the total area of the board. The processing unit determines the best optimal cuts and the quality class of the analyzed face, taking into account not only the standard rules of grading and detected defects, but also customized rules defined by the company. After both sides of the same board have been graded, it is started the procedure of board classifying based on both sides.

### Step 3: Preparing the data for display:

Following the panoramic image reconstruction and the results generation (quality class and defects), the data processing server 4b will store all the information in the common database 4c, in a specific format, and will generate the images that will be used for display on the production line interface. It is created an image with both faces, defects and optimal cuts will be displayed on it, and the quality class will be saved. The information stored in the common database and displayed to the user is made up of:
- Images with both faces
- Board sizes
- Optimal cuts and their sizes
- Cutting surface and units
- Defects, their type and size
- Degree of each face and final degree
- reference number of the board
With a view to determining the sizes of the object/board, the system according to the invention uses the initial calculation component of the distance to laser sensor to the object in order to calculate a mapping from pixels to a real-world measurement unit, thus determining in the image (not by sensors of light with emitters-receivers) the sizes of the object.

### Step 4: Statistics

Based on the saved information, there are displayed complex reports and graphics based on the characteristics of the boards, such as dividing into quality classes, volumes, species, sizes.

A common database 4c is populated/equipped with the information required for preprocessing by the calibration server 2a. During production, the processing server will use the preprocessing information in order to generate the results and store them in the same database.

The Common Storage Unit 4d uses the **Network File System** protocol (hereinafter referred to as NFS) which is a shared/common file system protocol that allows a customer computer to access files through a computer network the same way it accesses the locally stored files. The NFS is an open standard, accessible to anyone to implement.

Shared NFS ensures that the Mini PC 2 and the Processing Unit 4 exchange information with minimal latencies. The data capture subsystem 2b writes the predefined images to the disk location and sends processing requests to the processing unit 4 when the writes have been ended, ensuring their processing in due time. The files required for preprocessing are also written to a location in the same NFS. On the data processing server these files and all the information required for the reconstruction of panoramic images are read from the common storage unit at the start of it and saved in memory for ensuring the removal of latencies throughout processing.

The results generated by the data processing server are also stored on the common storage unit and served to the production line interface, without being necessary to send information via HTTP responses.

With reference to Figure 7, the neural system, according to the invention, may also include an inventory unit 5. This is an optional component that enables employees in the company headquarters to have an overview of the entire production. This will be used in order to view the stocktaking interface which provides customized features for users with administrative rights.

A stocktaking interface 5a, is a component served by the production line server 4a. Users can see in real time what is being processed on the production line, together with detailed statistics of their production. Furthermore, they can customize the grading rules:
- Exclusion of defects of certain sizes from the grading process
- Ignoring certain defect sizes in the grading process
- Excluding the boards of certain sizes from the grading process
- Grading so as to get the best grade or the largest percent of clean wood.
These custom rules will be saved in the common database 4d and taken into account when the boards are graded, in real time.

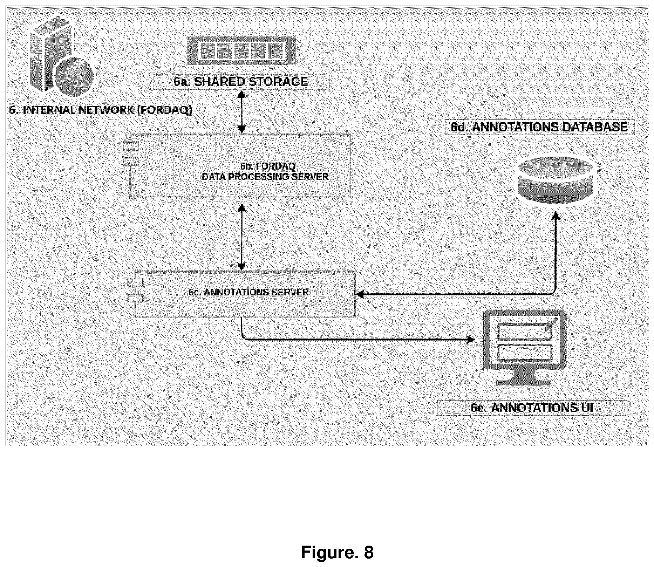

Referring to Figure 8, as an optional component of the neural system according to the invention, there have been implemented procedures for transferring data acquired in production - raw (unprocessed) images and their specific information - to the internal network 6. The collected data is further used in order to generate annotations - training data for neural networks. This internal network 6 includes:

A storage unit 6a, where the saved images are periodically synchronized, through automatic scripts, with the local storage unit, the saved data including:
- Board reference number;
- Row number;
- 4 images related to the current face of the board;
- Distances associated with the board;
- Preprocessing data.

A data processing server 6b of the internal network is a component that applies the same procedures as the data processing server 4b. The raw data is preprocessed and panoramic images are generated. Next, the panoramic images of the wooden boards are uploaded to the data labelling interface, where the personnel skilled for board grading mark with very high precision each defect identified on the faces of the wooden boards, together with its type and the quality class of the entire board.

An annotation server 6c is used as a *backend* for building training data and validating neural network. The flow is, as follows:
- Raw images and related metadata are synchronized on the storage component described in point 6a;
- A processing request is sent to an *endpoint* on the annotation server, with parameters defining the data that needs to be processed;
- The annotation server forwards a processing request to the data processing server from Fordaq;
- The Fordaq data processing server calculates the results and sends them back to the annotation server;
- The annotation server inserts the results into the annotation database.

An annotation database 6d storing the required information for the generation of training data - processing results, but also management data, such as: annotator identifier, marking date, download date, details regarding the consensus, etc. Since the annotation system is built as a data management system, the annotation database 6d has a different structure than that of the common database 4d on the processing unit.

The annotation interface 6e, served by the annotation server 6c, gives an overwrought and intuitive method of marking defects, optimal cuts, and quality classes to the data labeling team. The team for data labeling is made up of grading assistants, certified graders and wood quality inspectors. Each user has a certain level of rights that enable them access to functionalities and actions, as follows:
- Defect marking on the images of lumber board faces uploaded through the *endpoint* on the annotation server. The interface allows users to mark polygons around defects, together with the defect type. Furthermore, it provides them relevant information with regard to the board they are analyzing, information that influences grading: the size of the selected defect, its type, the percentage it occupies.
- Marking optimal cuts by placing rectangles in the Canvas.
- Selection of a quality class for each face of the board.
- Showing all information of both faces on the same page and board grading
- Marking individual images and boards as "Validated". When an annotator ends the process of marking defects on a board face, he/she can label it as validated. Validated images are automatically downloaded to the training data directory in a specific format, under the name of the current annotator.
- Labeling the individual images and boards as "checked". Inspectors can check images validated by the certified graders and assistants and, in case they have no marking problems, mark them as " checked". The verified images are automatically converted to a format specific training and saved in the training data directory, under the "checked" label.
- Joint marking on images - graders can discuss and grade together the wooden boards in the consensus process - decide together the type and shape of each marked defect. This process is very important for the dissemination of information within the team and for evaluating the individual performance of graders.
- Viewing statistics concerning the volume of data managed by each of the graders.
- Adding notes/comments to images.
- Giving feedback on images.
- Detailing the type of board - tangential, radial, semi-radial.
- Viewing a summary of each marked face.
- Manually testing the images in the application.
The manual annotation work carried out by the annotation team is further incorporated by the research team into the training process, and the neural network models are improved using the customer data in a constant feedback loop.

## Claims

1. A system for defect detection and classification into quality classes the wooden boards, incorporating a viewing unit that includes cameras mounted on a structure (frame) attached to a transverse conveyor with a board turning mechanism, and a processing unit comprising in turn an industrial data acquisition subsystem, a control subsystem for the industrial subsystem of data acquisition, a processing subsystem/ unit for the acquired data,
**characterized by that**
the data acquisition subsystem includes a set of industrial cameras (1b) located on two rows with a variable number of industrial cameras, each row being responsible for acquiring images for one face of the wooden board, acquisition achieved by a subsystem of data capture (2b) implemented on MINI PC (2), connected with a processing unit (4), some lighting sources (1a) and some laser sensors (1c), above the production line, before and after the boards turning mechanism, the subsystem acquiring images of the faces of the board to be classified;
the data acquisition control subsystem implemented on the initial calibration server (2a) being triggered and calibrating the data acquisition subsystem; and
subsystem of the processing unit incorporating a result generation server (4a), a data processing server (4b), a processing unit database (4c) and a shared storage unit (4d), the mentioned data processing including the following steps:
• segmentation of the visible boards in each image by passing the images through a neural network for wood area detection, the resulting segmentation mask being processed through computational vision algorithms for board separation;
• image and corresponding wood masks transformation with basic homographic transformations determined in the calibration process, this being used as a starting point for building a refined panoramic image;
• determination of the central board visible in the images considering as a reference image the image acquired from the camera aligned with the triggered position sensor, as a result of the precise positioning of the sensor in the hardware structure ensuring the viewing of the board of interest in the center of the reference image;
• determining the contour of the central board in the images adjacent to the selected reference image; and
• elimination of redundant images from the process to optimize the processing times,
generating on this basis a panoramic image of both faces of the object of interest/the analyzed board, allowing the identification of defects and the classification of the board in a quality class.

2. The system according to Claim 1, **characterized by that** the processing results are systematized in a results management subsystem, where, through said subsystem, there are presented and stored the processed images, the defects and the quality classes related to them.

3. The system according to Claim 1, **characterized by that** the industrial data acquisition subsystem, possesses a number of industrial cameras (1b), lights (1a), as well as auxiliary sensors that enable the automatic triggering of the data capture subsystem (2b) implemented on the MINI PC (2), which acquires all the information required for processing the data associated with a board moving off the production line.

4. The system according to Claim 3, **characterized by that** the data acquisition subsystem is calibrated by a brightness compensation procedure using an auxiliary white board.

5. The system according to Claim 3, **characterized by that** the data acquisition system is calibrated for the reconstruction of panoramic images with high precision using an auxiliary set of chessboards.

6. The system according to Claim 3, **characterized by that** the data acquisition system is calibrated through an automatic procedure to determine the mappings between the sizes in the images and the actual dimensions.

7. The system according to Claim 3, **characterized by that** the control system for data acquisition is optimized so as to operate at the speed of the belt/production line.

8. The system according to Claim 3, **characterized by that** the data processing subsystem/unit analyzes the object/board and generates the results associated with it.

9. The system according to Claims 5 and 8, **characterized by that** the processing system/unit for the acquired data generates a panoramic image of the analyzed object/analyzed board.

10. The system according to Claim 8, **characterized by that** processing subsystem/unit selects the object of interest from the panoramic image using algorithms of artificial intelligence and computational vision.

11. The system according to Claim 8, **characterized by the fact** that processing subsystem/unit selects detects the defects related to the analyzed object.

12. The system according to Claims 8, 9 and 11, **characterized by the fact that** processing subsystem/unit selects determines the quality class of the analyzed object/board.

13. The system according to Claim 1, **characterized by that** processing subsystem/unit analyzes both sides of the object/board and identifies the connection between them.

14. The system according to Claim 1, **characterized by that** the results management system/server (4a) enables the company to define and change the rules for grading the objects.

15. The system according to Claim 1, **characterized by that** the results management system/server (4a) displays the processing results in real time.
